# EUROPÄISCHE PATENTSCHRIFT

(11) **EP 0 654 451 B1**
(45) Veröffentlichungstag und Bekanntmachung des Hinweises auf die Patenterteilung: **21.01.1998**
(21) Anmeldenummer: 95100165.0
(22) Anmeldetag: 28.02.1992
(51) Int. Cl.: C03B 7/16

(54) **Rinneneinrichtung für eine Glasformmaschine**
Gab chute for a glass-making machine
Goulotte d'écoulement pour une machine de fabrication d'objets en verre

(30) Priorität: 22.05.1991 DE 4116593
(43) Veröffentlichungstag der Anmeldung: 24.05.1995
(62) Teilanmeldung aus: 92905328.8
(73) Patentinhaber: FIRMA HERMANN HEYE, D-31683 Obernkirchen (DE)
(72) Erfinder: Struckmeier, Manfred, D-31683 Obernkirchen (DE); Graefe, Andreas, D-31691 Seggebruch (DE); Möller, Eckhard, D-31683 Obernkirchen (DE)
(74) Vertreter: Kosel, Peter, Dipl.-Ing.

(56) Entgegenhaltungen:
- DE-B- 1 024 681
- US-A- 1 575 370
- US-A- 1 911 119
- US-A- 3 775 083

## Beschreibung

Die Erfindung betrifft eine Rinneneinrichtung gemäß dem Oberbegriff des Anspruchs 1.

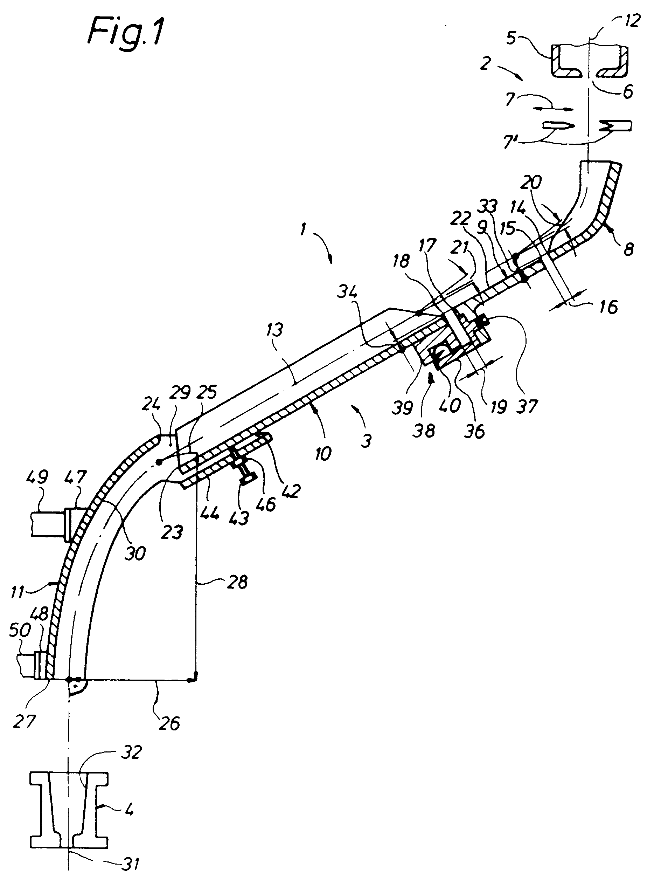

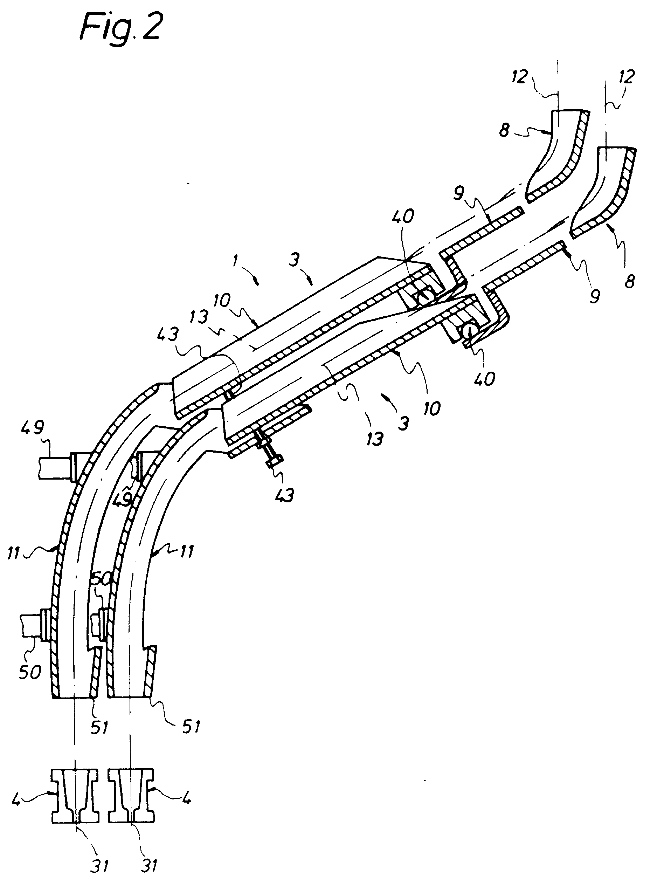

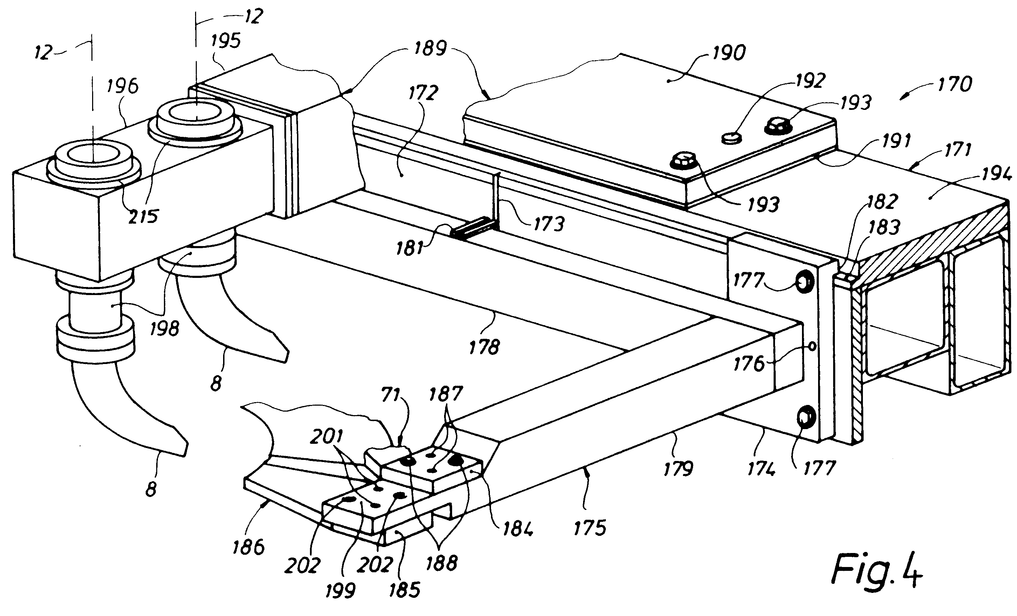

Ein bekanntes Rinnensystem dieser Art (US 1 911 119 A) ist vierfach zur Versorgung von vier Sektionen (Fig. 2) einer sog. I.S.-Glasformmaschine mit Tropfen vorgesehen. Jedes Rinnensystem 287 (Fig. 1 und 4) weist eine eigene, bezüglich des Tropfenauslasses aus dem Tropfenspeiser E (Fig. 1) radial bewegbare (Fig. 2) Scooprinne 288 auf. Das obere Ende jeder Langrinne 289 ist um einen waagerechten Kippbolzen 302 (Fig. 1) eines maschinenfesten Halters 303 heb- und senkber. Das untere Ende jeder Langrinne 289 ruht auf der als Stellschraube 304 (Fig. 1) ausgebildeten Stellvorrichtung eines Halters 305, an dem auch die Endrinne 290 mit zwei Anschlußpunkten 306 befestigt ist. Der Halter 305 ist durch zwei unter 90° angeordnete Stellschrauben 310,311 (Fig. 1 und 2) der Stelleinrichtung in einer waagerechten Ebene einstellbar. Nachteilig sind der hohe bauliche Aufwand für die Scooprinnen 288 und ihre Antriebe (Fig. 2 und 4) sowie die Bewegbarkeit jeder Langrinne 289 nur in einer senkrechten Ebene und die dadurch auftretenden Fluchtungsfehler mit der Endrinne 290 bei seitlicher Einstellbewegung der Endrinne. Nachteilig ist auch, daß Endrinne und Langrinne nur gemeinsam mit dem Halter 305 in der waagerechten Ebene einstellbar sind.

Bei einem bekannten Rinnensystem (US 1 575 370 A) weist ein Tropfenverteiler 7 einen oberen Scooprinnenteil 14 und einen unteren Scooprinnenteil 15 auf (Seite 1, Zeile 102 und 103), die durch einen Lagerring 10 um eine senkrechte Achse eines Tropfenauslasses 1 schwenkbar sind. Der obere Scooprinnenteil 14 ist im Störungsfall um eine waagerechte Achse 17 einer Standarte 18 des Lagerrings 10 nach unten kippbar, um den nachfolgenden Tropfen den freien Fell durch den Lagerring 10, eine Basis 12 und einen Rahmen 13 hindurch in einen Scherbenbunker zu ermöglichen. Der untere Scooprinnenteil 15 ist verhältnismäßig lang, um die verschiedenen Langrinnen 25 nacheinander mit Tropfen beschicken zu können. Daher ist die Aufenthaltsdauer der Tropfen in der Scooprinne 14,15 ungünstig lang, was zu einer Begrenzung der Schnittanzahl der Schere 3 je Minute und damit der Maschinenleistung fuhrt. Die Endrinne 4 ist durch einen waagerechten Ausleger 70 gehalten, der oben an einer Säule 71 montiert ist.

Ein sehr ähnliches Rinnensystem ist aus der DE-Auslegeschrift 1 024 681 bekannt. Dort sind ebenfalls ein um eine waagerechte Achse heb- und senkbarer oberer Scooprinnenteil 19 und ein verhältnismäßig langer unterer Scooprinnenteil 20 vorgesehen, also die gleichen Nachteile zu erwarten wie bei der US 1 575 370 A. Die Auslageschrift ist nicht auf die einzelnen Elemente des Rinnensystems 16, sondern auf einen die Gleiteigenschaften der Tropfen 14 in dem Rinnensystem 16 verbessernden Überzug 22 der Scooprinne 19,20 und der Langrinnen 21 gerichtet.

Der Erfindung liegt die Aufgabe zugrunde, die Rinneneinrichtung zu verbessern.

Diese Aufgabe ist durch die Merkmale des Anspruchs 1 gelöst. Wenn es sich um eine I.S.-Glasformmaschine handelt, findet vorzugsweise für je eine Form aller Sektionen der I.S.-Glasformmaschine nur eine Scooprinne Verwendung, die, wie z.B. in der US 3 775 083 A gezeigt, um die vertikale Achse des zugehörigen Tropfenauslasses schwenkbar ist. Vorzugsweise ist ferner die Neigung aller Langrinnen gegenüber der Waagerechten gleich. Durch die Stelleinrichtung läßt sich Koaxialität der Längsachsen des Tropfens und der Form erreichen, wodurch die Formung erleichtert und verbessert wird. Im allgemeinen gelangt der Tropfen in freiem Fall von einer Tropfenschere des Tropfenspeisers in die Scooprinne.

Die Kupplungsteile können besonders vorteilhaft als Aufnahmedorne ausgebildet sein, die eine leichte und schnelle Montage und Demontage der Endrinnen gestatten. Die Endrinne ist in jedem Fall mit einem komplementären Kupplungsteil versehen.

Durch die Merkmale des Anspruchs 2 läßt sich die Endrinne zweidimensional genau auf die Längsachse der zugehörigen Form einstellen. Vorzugsweise ist der Ausleger an einer um die erste Schwenkachse schwenkbaren Säule befestigt.

Gemäß Anspruch 3 ergibt sich eine besonders einfache und betriebssichere Längsverschiebung für das Kupplungsteil. Die axiale Festlegung der ersten Gewindespindel kann z.B. an dem Auslager oder an einem maschinenfesten Konstruktionsteil erfolgen. Die erste Gewindespindel kann von Hand betätigbar sein.

Die Merkmale des Anspruchs 4 führen zu einer einfachen und betriebssicheren Schwenkung des Auslegers und damit das Kupplungsteils. Die axiale Festlegung der zweiten Gewindespindel kann z.B. an einem maschinenfesten Konstruktionsteil geschehen. Auch die zweite Gewindespindel kann von Hand betätigbar sein.

Die Merkmale des Anspruchs 5 führen zu einer besonders sicheren und stabilen Aufnahme der Endrinne. Von besonderem Vorteil ist, daß nur einer der Ausleger, in der Regel wegen der besseren Erreichbarkeit der untere, direkt zur Schwenkung des Auslegers antreibbar ist, während der andere Ausleger durch die gemeinsame Säule schwenkend mitgenommen wird. Das Getriebe kann z.B. als Kettengetriebe mit oder ohne Kettenspanner ausgebildet sein, wobei wiederum nur eine, zweckmäßigerweise wegen der besseren Erreichbarkeit die untere, der beiden Gewindespindeln direkt anzutreiben ist, während die andere Gewindespindel durch das Getriebe synchron mitgenommen wird.

Die Merkmale des Anspruchs 6 führen zu einer besonders schonenden Umlenkung des Tropfens in die Längsachse der Form. Bei seinem Lauf durch die Endrinne wird der Tropfen durch Zentripetalkräfte in Anlage an der Endrinne gehalten. Die Größe der Zentripetalkräfte nimmt von einem Maximalwert am oberen Ende der Endrinne bis auf ein Minimum am unteren Ende der Endrinne kontinuierlich ab. Das untere Ende der Endrinne kann zur Verbesserung der Zentrierung des Tropfens wahlweise mit einem Trichter ausgestattet werden, der schließlich den Tropfen in die Form einspeist.

Die Merkmale des Anspruchs 7 empfehlen sich in bestimmten Fällen bei den Endrinnen der äußersten Sektionen einer I.S.-Glasformmaschine. Dadurch ergeben sich im wesentlichen die gleichen vorteilhaften Wirkungen auf die Tropfenbewegung wie gemäß Anspruch 6.

Gemäß Anspruch 8 kann insbesondere bei schwierigen baulichen Verhältnissen in den äußersten Sektionen einer I.S.-Glasformmaschine vorgegangen werden. Auf diese Weise kann verhindert werden, daß bei anderenfalls ungünstigar geometrischer Gestaltung der Bewegungsbahn des Tropfens in der Endrinne der Tropfen nach seinem Austritt aus der exakt ausgerichteten Endrinne einen Drehimpuls um eine Querachse erhält und zusätzlich über die Formenmitte hinausgetrieben wird. Solche Abweichungen von der idealen Tropfenbahn führen zu unbefriedigender Ladung der Formen. Die Gestaltung der Bewegungsbahn gemäß Anspruch 8 schafft hier Abhilfe.

Die Merkmale des Anspruchs 9 empfehlen sich dann, wenn die lange Halbachse des Ellipsenviertels senkrecht steht.

Gemäß Anspruch 10 wird der Tropfen auch an dieser Übergangsstelle weitestmöglich geschont und weitgehend stoßfrei an die Endrinne übergeben.

Gemäß Anspruch 11 sind die Vorteile der Erfindung auch bei Mehrfachtropfen- oder Mehrfachformbetrieb nutzbar.

Weitere Merkmale und Vorteile der Erfindung ergeben sich aus der nachfolgenden Beschreibung von Ausführungsbeispielen anhand der Zeichnungen. Es zeigt:
Fig. 1 eine schematische Seitenansicht eines Rinnensystems für Einfachtropfenbetrieb,
Fig. 2 eine schematische Seitenansicht zweier Rinnensysteme für Doppeltropfenbetrieb,
Fig. 3 den unteren Bereich des leicht abgewandelten Rinnensystems gemäß Fig. 1 mit zugehöriger Stelleinrichtung,
Fig. 4 eine schematische perspektivische Darstellung eines Scoopbalkens mit angebautem Tropfenverteiler und Haltevorrichtung für Gleiteinheiten,
Fig. 5 die Draufsicht auf eine Hälfte einer Gleiteinheit des Rinnensystems,
Fig. 6 die Stirnansicht gemäß Linie VI - VI in Fig. 5,
Fig. 7 die Schnittansicht nach Linie VII - VII in Fig. 5 mit zusätzlich angebauten Elementen,
Fig. 8 die Schnittansicht nach Linie VIII - VIII in Fig. 7,
Fig. 9 eine Seitenansicht des oberen Bereichs einer Endrinne des Rinnensystems,
Fig. 10 die Schnittansicht nach Linie X - X in Fig. 9,
Fig. 11 die Schnittansicht nach Linie XI - XI in Fig. 9,
Fig. 12 die Schnittansicht nach Linie XII - XII in Fig. 10,
Fig. 13 die Ansicht gemäß Linie XIII - XIII in Fig. 9,
Fig. 14 einen Längsschnitt durch den unteren Bereich einer Langrinne und eine andere Ausführungsform der Endrinne,
Fig. 15 in schematischer Darstellung den Verlauf einer Bewegungsbahn des Tropfens in einer wiederum anderen Endrinne,
Fig. 16 eine teilweise weggebrochene Seitenansicht einer Stelleinrichtung für zwei gemäß Fig. 2 im Doppeltropfenbetrieb einsetzbare Endrinnen,
Fig. 17 die Schnittansicht nach Linie XVII - XVII in Fig. 16,
Fig. 18 die Schnittansicht nach Linie XVIII - XVIII in Fig. 17,
Fig. 19 die Schnittansicht nach Linie XIX - XIX in Fig. 17,
Fig. 20 die Schnittansicht nach Linie XX - XX in Fig. 17,
Fig. 21 die Schnittansicht nach Linie XXI - XXI in Fig. 16,
Fig. 22 die Schnittansicht nach Linie XXII - XXII in Fig. 21,
Fig. 23 die Schnittansicht nach Linie XXIII - XXIII in Fig. 21,
Fig. 24 die Schnittansicht nach Linie XXIV - XXIV in Fig. 21 und
Fig. 25 die Seitenansicht gemäß Linie XXV - XXV in Fig. 16.

Fig. 1 zeigt schematisch eine Rinneneinrichtung 1 zur Leitung von Tropfen schmelzflüssigen Glases von einem Tropfenspeiser 2 durch ein Rinnensystem 3 in eine Form 4, insbesondere eine Vorform einer nicht weiter dargestellten I.S.-Glasformmaschine.

Der Tropfenspeiser 2 weist in an sich bekannter Weise einen Speiserkopf 5 auf, aus dessen Tropfenauslaß 6 ein Strang schmelzflüssigen Glases austritt, von dem periodisch durch eine in Richtung des Doppelpfeils 7 bewegliche Schere 7' Tropfen abgetrennt werden.

Das Rinnensystem 3 weist eine Scooprinne 8, einen Gleitkörper 9, eine Langrinne 10 und eine Endrinne 11 auf.

Die Scooprinne 8 ist in diesem Fall in hier nicht näher dargestellter, an sich bekannter Weise um eine Längsachse 12 des Tropfenauslasses 6 schwenkbar. Die Scooprinne 8 fängt daher sämtliche durch die Schere 7' abgetrennten Tropfen auf und leitet sie je nach ihrer Schwenkstellung nacheinander dem Rest der nachfolgenden Rinnensysteme 3 zu.

Jeder Tropfen durchläuft das Rinnensystem 3 mit seiner Längsachse entlang einer in Fig. 1 strichpunktiert eingetragenen Bewegungsbahn 13. Die Scooprinne 8 ist gekrümmt und lenkt den Tropfen schräg nach unten um. Zwischen einem unteren Ende 14 der Scooprinne 8 und einem oberen Ende 15 des Gleitkörpers 9 besteht ein Abstand 16 von z.B. 65 mm. In ähnlicher Weise besteht zwischen einem unteren Ende 17 des Gleitkörpers 9 und einem oberen Ende 18 der Langrinne 10 ein Abstand 19 von z.B. 5 mm. Wie die Bewegungsbahn 13 andeutet, überwindet der Tropfen die Abstände 16, 19 jeweils in freiem Flug und trifft unter einem verhältnismäßig geringen Auftreffwinkel 20 und 21 zunächst auf eine schräg nach unten geneigte obere Gleitfläche 22 des Gleitkörpers 9 und sodann in die ebenfalls schräg nach unten geneigte Langrinne 10. Die Langrinne 10 ist gerade ausgebildet und gibt den Tropfen an ihrem unteren Ende 23 in ein oberes Ende 24 der Endrinne 11 ab. Innerhalb der Endrinne 11 verläuft die Bewegungsbahn 13 entlang dem unteren Teil eines Ellipsenviertels 25. Die kleine Halbachse 26 des Ellipsenviertels 25 steht an einem unteren Ende 27 der Endrinne 11 rechtwinklig zu der Bewegungsbahn 13. In Fig. 1 ist auch die senkrechte lange Halbachse 28 des Ellipsenviertels 25 eingezeichnet.

Auch zwischen dem unteren Ende 23 und dem oberen Ende 24 besteht ein Abstand 29, den der Tropfen in freiem Flug überwindet, bis er in Berührung mit einer Gleitfläche 30 der Endrinne 11 tritt und von dieser nach unten hin koaxial zu einer Längsachse 31 der Form 4 umgelenkt wird. Vom unteren Ende 27 der Endrinne 11 bewegt sich der Tropfen also in freiem Fall in eine Formausnehmung 32 der Form 4.

Durch die erfindungsgemäße Ausgestaltung des Rinnensystems 3 wird ein optimaler Tropfenlauf erzielt, der zu gut reproduzierbarer Tropfenform führt.

Die Auftreffwinkel 20, 21 kommen dadurch zustande, daß einerseits das untere Ende 14 der Scooprinne 8 gegenüber dem oberen Ende 15 des Gleitkörpers 9 und andererseits das untere Ende 17 des Gleitkörpers 9 gegenüber dem oberen Ende 18 der Langrinne 10 eine Überhöhung 33 und 34 rechtwinklig zu der Bewegungsbahn 13 aufweist. Die Überhöhungen 33, 34 werden nur so groß gewählt, daß ein Auftreffen der Tropfen auf die oberen Enden 15, 18 in allen Betriebszuständen gerade sicher vermieden wird.

Der Gleitkörper 9 ist in später zu beschreibender Weise maschinenfest abgestützt.

Jede Langrinne 10 ist durch ein Universalgelenk 38 mit ihrem Gleitkörper 9 verbunden. Das Universalgelenk weist einen an der Unterseite der Langrinne 10 befestigten Kugelkäfig 39 auf, der einen an einem Tragelement 36 festgelegten Kugelkörper 40 übergreift. Des Tragelement 36 ist mit einer Schraube 37 einstellbar an dem zugehörigen Gleitkörper 9 festgelegt.

Das untere Ende 23 der Langrinne 10 erstreckt sich mit senkrechter Bewegungsfreiheit und Sicherung vor Drehung um seine Längsachse in einen senkrechten Schacht 42 am oberen Ende 24 der zugehörigen Endrinne 11. Es ist eine als Stellschraube ausgebildete Stellvorrichtung 43 vorgesehen, die in eine Gewindebohrung eines Trägers 44 eingeschraubt und durch eine Kontermutter 46 gesichert ist. Auf der Stellvorrichtung 43 ruht das untere Ende 23 der Langrinne 10 heb- und senkbar um eine waagerechte Achse des Kugelkörpers 40.

An Konsolen 47 und 48 an der Außenseite der Endrinne 11 sind sich waagerecht erstreckende Tragarme 49 und 50 montiert, deren Funktion später erläutert wird.

Die Bewegungsbahn 13 ist in jedem Fall durch relative Einstellung der einzelnen Elemente des Rinnensystems 3 so zu gestalten, daß unerwünschte ruckartige Beanspruchungen des Tropfens vermieden werden. So ist beim Übergang von der Scooprinne 8 zum Gleitkörper 9 und vom Gleitkörper 9 auf die Langrinne 10 besonders auf eine optimale Überhöhung 33, 34 zu achten, damit die Auftreffwinkel 20, 21 optimal ausfallen und der Tropfen nach dem jeweiligen freien Flug nicht unerwünscht stark deformiert wird. Desgleichen ist darauf zu achten, daß das Stück der Bewegungsbahn 13 im Bereich der Langrinne 10 tangential in das Ellipsenviertel 25 übergeht, so daß auch hier der Tropfen vor ruckartigen Beanspruchungen bewahrt wird.

In allen Zeichnungsfiguren sind gleiche Teile jeweils mit gleichen Bezugszahlen versehen.

Fig. 2 zeigt eine Rinneneinrichtung 1 für Doppeltropfenbetrieb, wo also entlang den beiden Längsachsen 12 im wesentlichen gleichzeitig zwei Tropfen in die zugehörige Scooprinne 8 fallen und durch den Rest des zugehörigen Rinnensystems 3 in die jeweilige Form 4 geleitet werden. Die beiden Rinnensysteme 3 sind im wesentlichen geschachtelt übereinander angeordnet. Als Besonderheit ist jeweils an des untere Ende der Endrinnen 11, 11 ein Trichter 51 angeformt, der zur Absicherung der Zentrierung des Tropfens auf die Längsachse 31 der Form 4 dient.

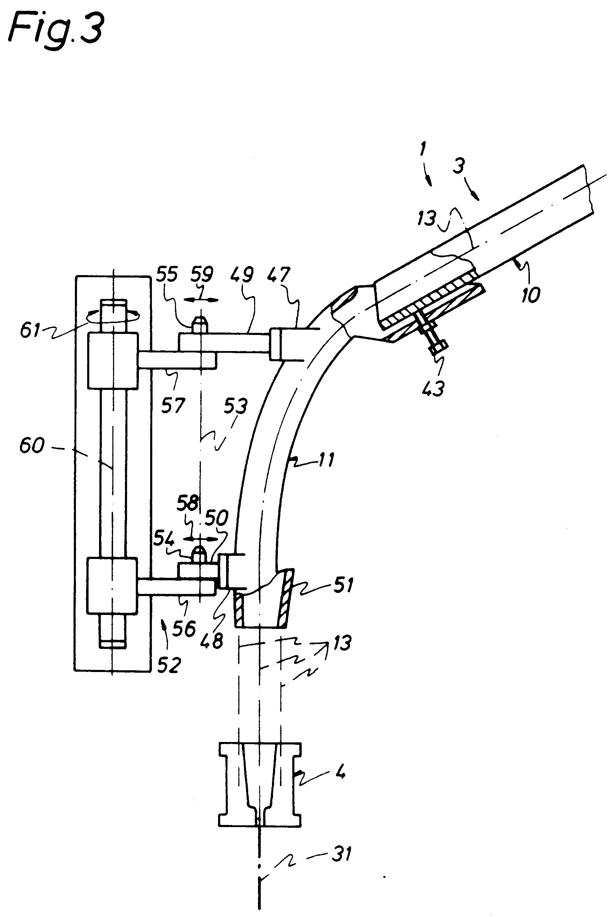

In Fig. 3 ist eine Stelleinrichtung 52 gezeigt, mit der die Endrinne 11 in einer zu der Längsachse 31 der Form 4 rechtwinkligen Ebene eingestellt werden kann. Die Darstellung der Stelleinrichtung 52 in Fig. 3 ist schematisch. Die Stelleinrichtung 52 weist für die Endrinne 11 zwei entlang einer senkrechten Achse 53 miteinander fluchtende, als Aufnahmedorne ausgebildete Kupplungsteile 54 und 55 auf. Die Tragarme 49, 50 sind jeweils mit einer Lagerbohrung frei drehbar auf den Kupplungsteilen 55, 54 gelagert. Jedes Kupplungsteil 54, 55 ist an einem Ausleger 56, 57 gemäß den Doppelpfeilen 58, 59 in der zur Längsachse 31 der Form 4 rechtwinkligen Ebene längsverschiebbar. Außerdem ist jeder Ausleger 56, 57 um eine zur Längsachse 31 der Form 4 parallele, maschinenfeste erste Schwenkachse 60 im Sinne des Doppelpfeils 61 hin und her schwenkbar. Die Einzelheiten dazu werden später erläutert. In jedem Fall läßt sich durch die Stelleinrichtung 52 erreichen, daß sich das senkrechte Ende der Bewegungsbahn 13, wie in Fig. 3 durch drei unterschiedliche strichpunktierte Linien angedeutet, koaxial oder parallel zu der Längsachse 31 der Form 4 befindet.

Fig. 4 zeigt einen Teil einer I.S.-Glasformmaschine 170, deren Gestell einen auf nicht gezeigten seitlichen Ständern ruhenden Scoopbalken 171 aufweist. Eine Vorderfläche 172 des Scoopbalkens 171 trägt, vorzugsweise in einer Mittenebene der I.S.-Glasformmaschine 170, eine senkrechte Mittelmarkierung 173.

An die Vorderfläche 172 sind in seitlichem Abstand voneinander Montageplatten 174 einer Haltevorrichtung 175 mit Zentrierstiften 176 zentriert und mit Schrauben 177 befestigt. Die Haltevorrichtung 175 ist in der Draufsicht im wesentlichen U-förmig ausgebildet und weist eine an den Montageplatten 174 befestigte Basis 178 und sich von der Basis 178 nach vorne erstreckende Arme, z.B. 179, auf. Oben auf der Basis 178 ist eine sich waagerecht erstreckende Mittelmarkierung 181 befestigt, die vorzugsweise ebenfalls in der Mittelebene der I.S.-Glasformmaschine 170 angeordnet ist.

Die Montageplatten 174 hängen oben jeweils mit einem Haken 182 auf einer Gleitschiene 183 an der Vorderfläche 172. Die Haltevorrichtung 175 kann daher bei ihrer Montage seitlich solange verschoben werden, bis die Mittelmarkierung 181 mit der maschinenfesten Mittelmarkierung 173 ausgerichtet ist. In dieser Position werden die Zentrierstifte 176 eingebracht, bevor die Schrauben 177 angezogen werden. Auf diese Weise ist die Haltevorrichtung 175 sehr genau relativ zum Scoopbalken 171 zentriert.

An den freien Enden der Arme 179 sind jeweils Montagestücke 184 und 185 einer oberen Gleiteinheit 71 und einer unteren Gleiteinheit 186 mit Paßstiften 187 und Schrauben 188 befestigt. Einzelheiten der Gleiteinheit 71 werden später erläutert. Die I.S.-Glasformmaschine 170 ist für Doppelformbetrieb entsprechend Fig. 2 eingerichtet und weist deshalb an einem Tropfenverteiler 189 zwei Scooprinnen 8,8 auf, von denen die in Fig. 4 rechte, obere die Tropfen schmelzflüssigen Glases auf die obere Gleiteinheit 71 übergibt, während die in Fig. 4 linke Scooprinne 8 die Tropfen auf die untere Gleiteinheit 186 leitet.

Der Tropfenverteiler 189 weist eine Grundplatte 190 auf, die unter Zwischenlage einer Zwischenplatte 191 mit Paßstiften 192 und Schrauben 193 auf einer oberen Fläche 194 des Scoopbalkens 171 befestigt ist. Die Zwischenplatte 191 dient dabei dem Zweck, die Höhenlage des Tropfenverteilers 189 einzustellen.

Der Tropfenverteiler 189 weist ferner einen Ausleger 195 und einen daran vorne angebauten Kopf 196 auf.

In dem Kopf 196 sind, fluchtend mit den Längsachsen 12 (s. auch Fig. 2), Drehhülsen drehbar gelagert. Diese Drehhülsen sind in an sich bekannter Weise schrittweise oszillierend antreibbar, so daß die Scooprinnen 8,8 nacheinander die zugehörigen übrigen Rinnensysteme 3 mit Tropfen schmelzflüssigen Glases versorgen können. Oberhalb jeder Drehhülse ist an dem Kopf 196 ein Einlauftrichter 215 befestigt.

Die Drehhülsen tragen unten Zwischenrohre 198 unterschiedlicher Länge, so daß in Fig. 4 die linke Scooprinne 8 tiefer als die rechte Scooprinne 8 angeordnet ist. Die Scooprinnen 8,8 sind jeweils an das untere Ende der Zwischenrohre 198 lösbar montiert.

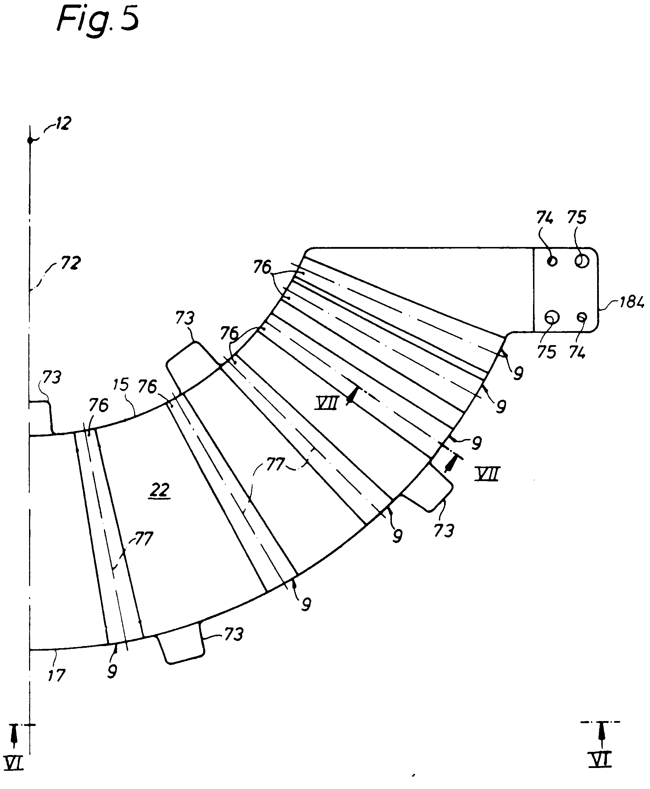

Fig. 5 zeigt sechs zu einer Hälfte einer 12Sektionen-I.S.-Glasformmaschine 170 gehörende Gleitkörper 9, die miteinander zu der Gleiteinheit 71 verbunden sind. Die andere Hälfte der Gleiteinheit 71 ist spiegelbildlich zu der Achse 72 ausgebildet. Die Gleiteinheit 71 ist in diesem Fall als Gußstück ausgeführt und mit radial vorstehenden Spannocken 73 für die Bearbeitung versehen. Die äußeren Spannocken 73 werden nach der Bearbeitung der Gleiteinheit 71 abgetrennt.

In der oberen Gleitfläche 22 jedes Gleitkörpers 9 ist eine den Tropfen führende Gleitmulde 76 vorgesehen. Die Längsachse 77 jeder Gleitmulde 76 liegt in einer Ebene durch die Längsachse 12 des Tropfenauslasses 6 (Fig. 1). Das Montagestück 184 ist mit Paßbohrungen 74 für die Paßstifte 187 (Fig. 4) und Durchgangsbohrungen 75 für die Schrauben 188 (Fig. 4) versehen.

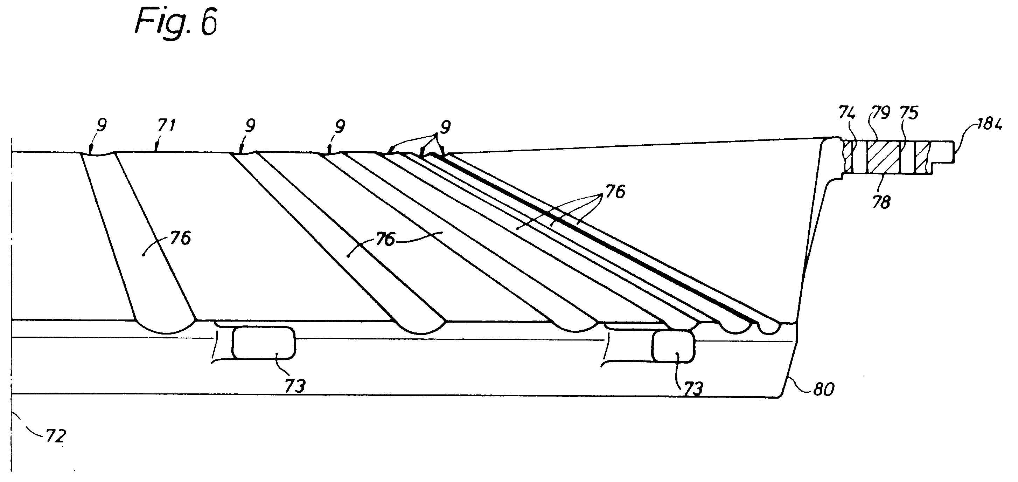

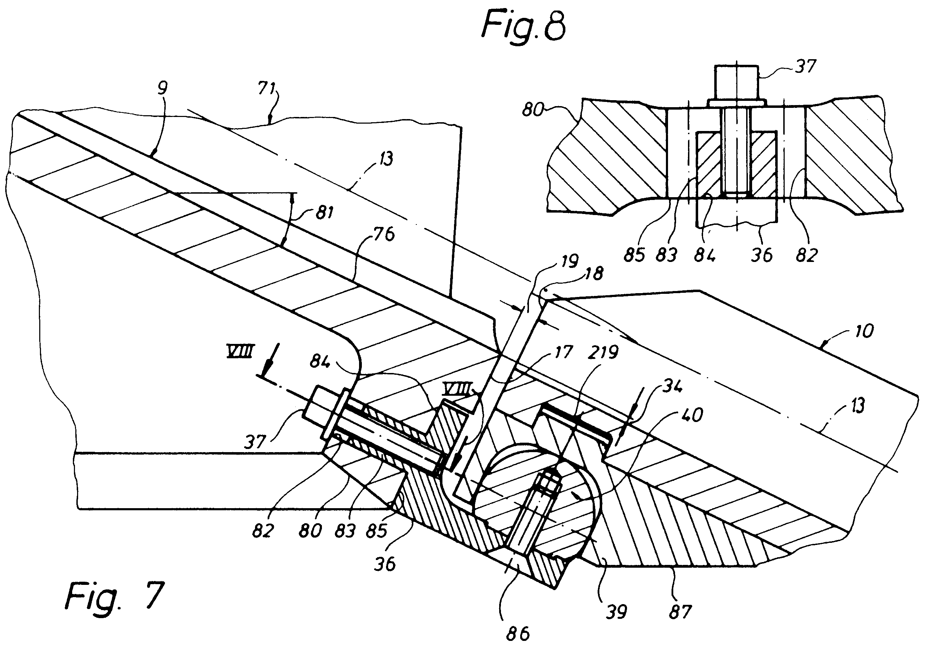

Fig. 6 stellt eine weitere Ansicht der halben Gleiteinheit 71 gemäß Fig. 5 dar, der weitere Einzelheiten zu entnehmen sind. In diesem besonderen Fall ist jedes der beiden Montagestücke 184 mit einer unteren Montagefläche 78 und einer oberen Montagefläche 79 versehen. Die Montageflächen 78,79 sind zueinander parallel. Bei dieser Ausführungsform kann die Gleiteinheit 71 sowohl als obere Gleiteinheit 71 gemäß Fig. 4 als auch als untere Gleiteinheit 186 gemäß Fig. 4 verwendet werden. Die beiden Gleiteinheiten können dann zur Erleichterung der Herstellung und Lagerhaltung identisch ausgebildet sein.

Gemäß Fig. 6 ist an die Gleiteinheit 71 unten eine durchgehende Schürze 80 angeformt, deren Zweck im Zusammenhang mit Fig. 7 näher erläutert wird.

Die Tiefe der Gleitmulden 76 nimmt vom oberen Ende 15 bis zum unteren Ende 17 des Gleitkörpers 9 hin zu. Die Gleitmulden 76 sind im Querschnitt kreisförmig ausgebildet.

Fig. 7 verdeutlicht weiter die Anordnung und Ausbildung der Gleitmulden 76. Die untere Scheitellinie jeder Gleitmulde 76 ist gegenüber der Waagerechten um einen Winkel 81 von z.B. 26° geneigt.

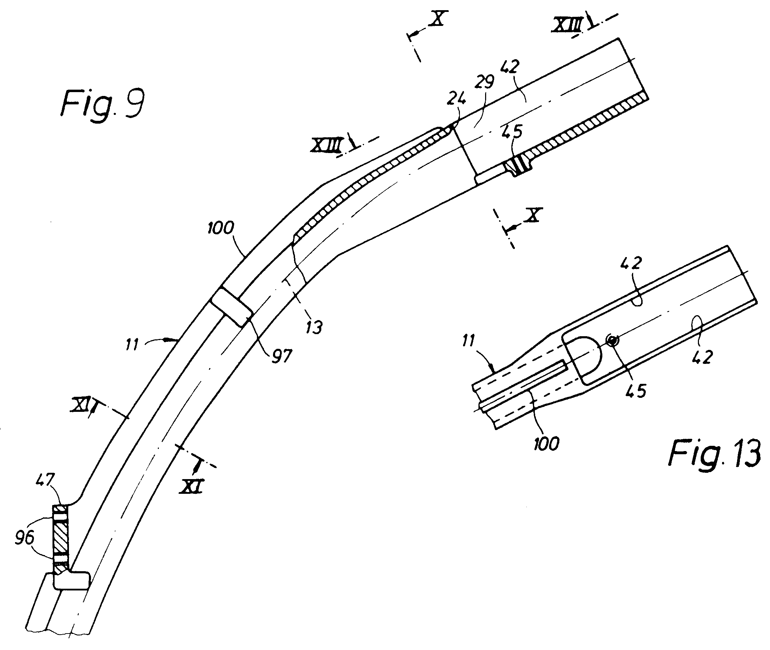

Gemäß Fig. 7 ist in die Schürze 80 für jeden Gleitkörper 9 eine geneigte, schlitzartige Durchbrechung 82 eingearbeitet. In die Durchbrechung 82 greift ein rückwärtiger Fortsatz 83 des Tragelements 36 (vgl. Fig. 1) mit seitlichem Spiel (vgl. Fig. 8) ein. Die Schraube 37 ist in eine Gewindebohrung des Fortsatzes 83 eingeschraubt und zieht eine Anlagefläche 84 des Tragelements 36 gegen eine Gegenfläche 85 der Schürze 80. Auf diese Weise läßt sich das Tragelement 36 in gewünschter Position relativ zu der Gleiteinheit 71 fixieren.

Der Kugelkörper 40 ist unten abgeflacht und mit einer Schraube 86 an dem Tragelement 36 befestigt. Fig. 7 verdeutlicht, wie der Kugelkörper 40 von dem Kugelkäfig 39 der Langrinne 10 übergriffen wird.

Der Kugelkäfig 39 ist an ein gesondertes Bauteil 87 angeformt, das mit der Unterseite der Langrinne 10 verschraubt ist.

Fig. 8 verdeutlicht die seitliche Bewegbarkeit des Fortsatzes 83 in der Durchbrechung 82. Bei Bedarf kann der Fortsatz 83 auch quer zur Längserstreckung der Durchbrechung 82 in der Höhe relativ zu der Gleiteinheit 71 einstellbar sein. Dann müßte in Abweichung von der Darstellung in Fig. 7 auch in senkrechter Richtung ein Spiel zwischen dem Fortsatz 83 und der Durchbrechung 82 bestehen. So ließe sich das obere Ende der Langrinne 10 auch dreidimensional relativ zu der Gleiteinheit 71 einstellen.

Fig. 9 zeigt weitere Einzelheiten des oberen Bereichs der Endrinne 11. Die Konsole 47 ist mit Gewindabohrungen 96 versehen, in die Schrauben zur Befestigung des Tragarms 49 (Fig. 3) eingedreht werden. Über die Länge der Endrinne 11 sind wie bei den Langrinnen 10 Spannflächen 97 verteilt, an denen die Endrinne 11 eingespannt und dann mechanisch bearbeitet werden kann.

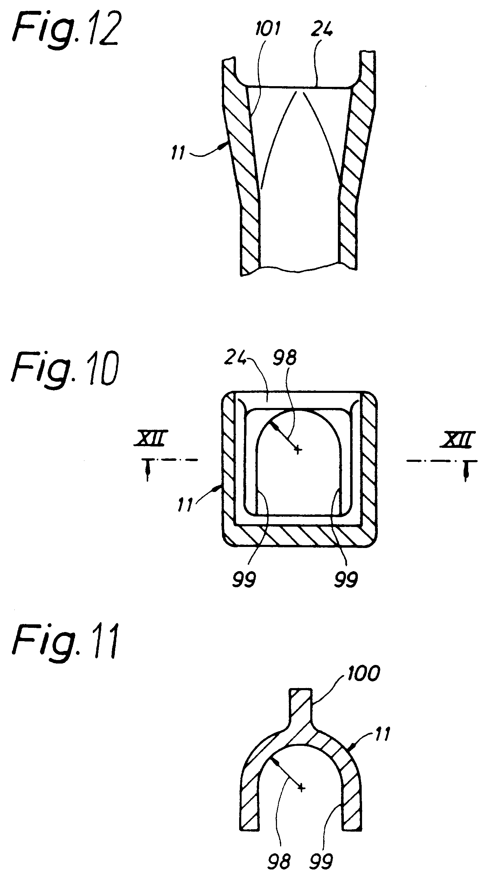

Die Fig. 10 und 11 zeigen des Querschnittsprofil der Endrinne 11, das außen durch einen Halbkreis mit dem Radius 98 gebildet ist. An den Halbkreis schließen sich ebene senkrechte Seitenwände 99 an, so daß sich ein im wesentlichen U-förmiges Profil ergibt. Nach außen schließt sich an das Rinnenprofil eine angeformte Längsrippe 100 zur Versteifung an.

Gemäß Fig. 12 ist am oberen Ende 24 der Endrinne 11 das Rinnenprofil mit einer trichterartigen Erweiterung 101 nach oben hin versehen, wodurch die Übernahme des Tropfens von der Langrinne erleichtert und verbessert wird.

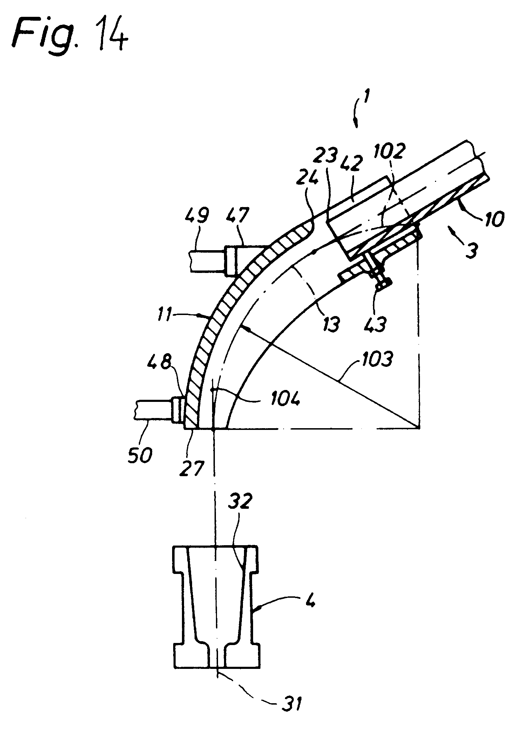

In Fig. 13 ist besonders gut der Schacht 42 zur Aufnahme und seitlichen Führung des unteren Endes 23 der Langrinne 10 (Fig. 1) zu erkennen.

Bei dem Ausführungsbeispiel nach Fig. 14 ist die Bewegungsbahn 13 der Längsachse des Tropfens in der Endrinne 11 als Teil eines Viertelkreises 102 mit einem Radius 103 ausgebildet. Das Stück der Bewegungsbahn 13 im Bereich der Langrinne 10 geht tangential in den Viertelkreis 102 über. Am unteren Ende 27 der Endrinne 11 ist eine senkrechte Tangente 104 an die Bewegungsbahn 13 koaxial mit der Längsachse 31 der Form 4. Der Tropfen gelangt also auch in diesem Fall nach dem unteren Ende 27 der Endrinne 11 in freiem Fall in die Formausnehmung 32.

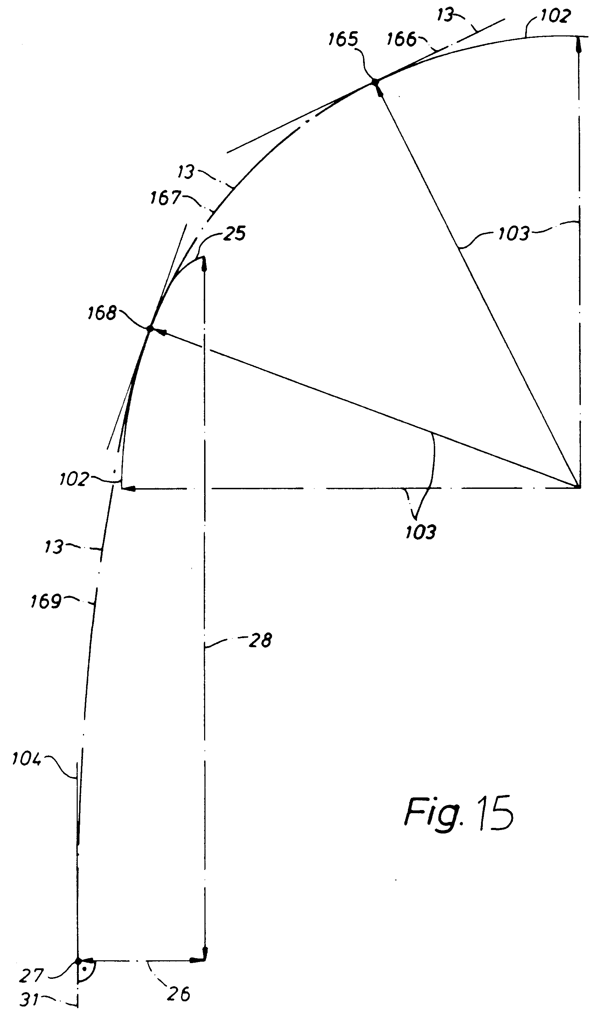

Fig. 15 zeigt ein weiteres Ausführungsbeispiel der Bewegungsbahn 13 der Längsachse des Tropfens. In einem Punkt 165 der Bewegungsbahn 13 geht ein schräg nach unten geneigter Abschnitt 166 der Bewegungsbahn 13 am unteren Ende der Langrinne 10 (Fig. 1) tangential in einen Teil 167 eines Viertelkreises 102 mit dem Radius 103 über. Der Teil 167 der Bewegungsbahn 13 geht seinerseits in einem Punkt 168 tangential in einen unteren Teil 169 eines Ellipsenviertels 25 über. Dabei nähert sich der Teil 167 dem Ellipsenviertel 25 von außen. An dem unteren Ende 27 (Fig. 1) der Endrinne 11 liegt die kleine Halbachse 26 des Ellipsenviertels 25 rechtwinklig zu der Bewegungsbahn 13 und waagerecht, so daß der Teil 169 mit der senkrechten Tangente 104 in die Längsachse 31 der Form 4 (Fig. 1) übergeht. Ergänzend ist die lange Halbachse 28 des Ellipsenviertels 25 eingezeichnet.

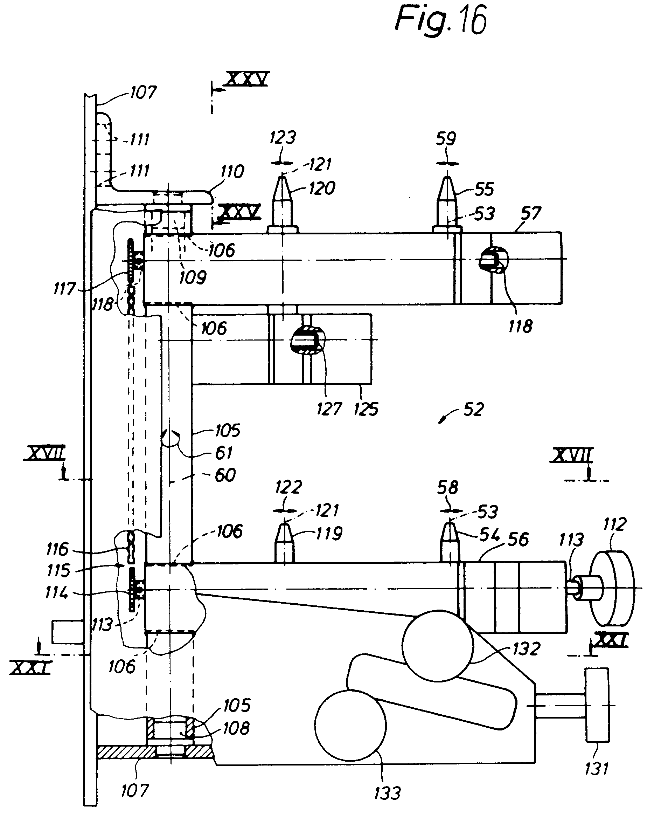

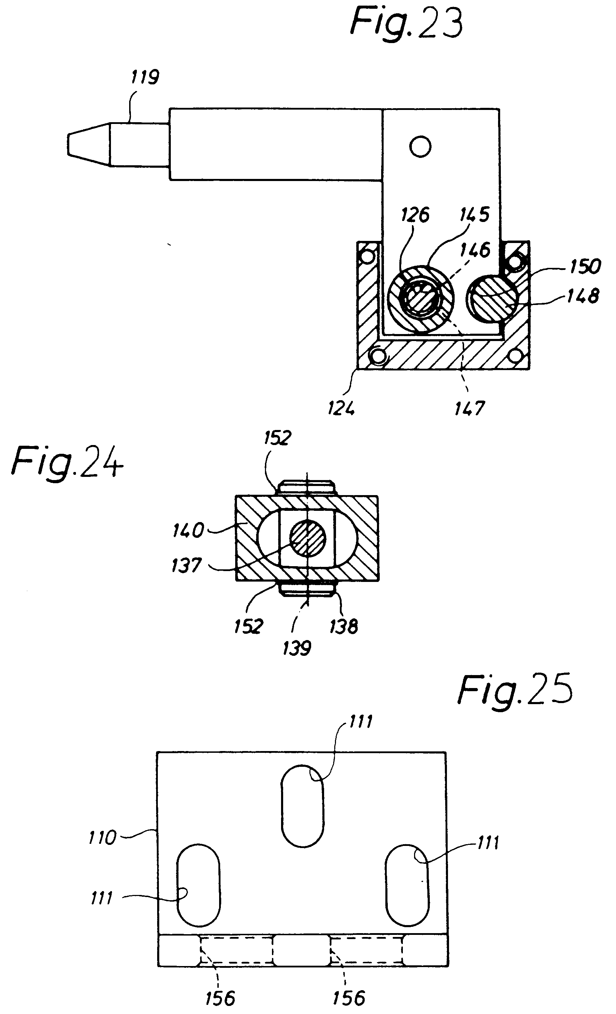

Gemäß Fig. 16 sind die Ausleger 56, 57 in senkrechtem Abstand voneinander jeweils an einer gemeinsamen, um die erste Schwenkachse 60 schwenkbaren Säule 105 befestigt. Dazu sind Abschnitte der Säule 105 jeweils zur Zentrierung in eine komplementäre Tasche 106 der Ausleger 56, 57 eingesetzt und mit den Auslegern verschweißt. Die Säule 105 ist rohrförmig ausgebildet. Unten greift in die Säule 105 ein mit einem maschinenfesten Rahmen 107 verschweißter Lagerzapfen 108 ein. Ein ähnlicher Lagerzapfen 109 greift von oben her in die Säule 105 ein. Der Lagerzapfen 109 ist mit einem Winkelstück 110 verschweißt, das über Langlöcher 111 (siehe auch Fig. 25) an dem Rahmen 107 derart senkrecht einstellbar zu befestigen ist, daß sich eine insgesamt straffe, aber doch leichtgängige Schwenklagerung der Säule 105 ergibt.

Die gleichzeitige Einstellung der Kupplungsteile 54, 55 in Richtung der Doppelpfeile 58, 59 erfolgt in später näher zu beschreibender Weise über ein Handrad 112 und eine axial festgelegte erste Gewindespindel 113. Die erste Gewindespindel 113 erstreckt sich der Länge nach durch den gesamten Ausleger 56 und trägt in Fig. 16 am linken Ende ein daran befestigtes Kettenrad 114 eines Getriebes 115. Das Getriebe 115 weist außerdem eine Kette 116 auf, die unten über das Kettenrad 114 und oben über ein gleichartiges Kettenrad 117 läuft. Das obere Kettenrad 117 ist an dem linken Ende einer weiteren ersten Gewindespindel 118 befestigt, die sich der Länge nach durch den oberen Ausleger 57 erstreckt. Die erste Gewindespindel 118 bewegt das Kupplungsteil 55 gleichsinnig und gleichzeitig mit der Bewegung des Kupplungsteils 54. Bei Bedarf kann ein geeigneter Kettenspanner vorgesehen sein, um die optimale Spannung der Kette 116 einzustellen.

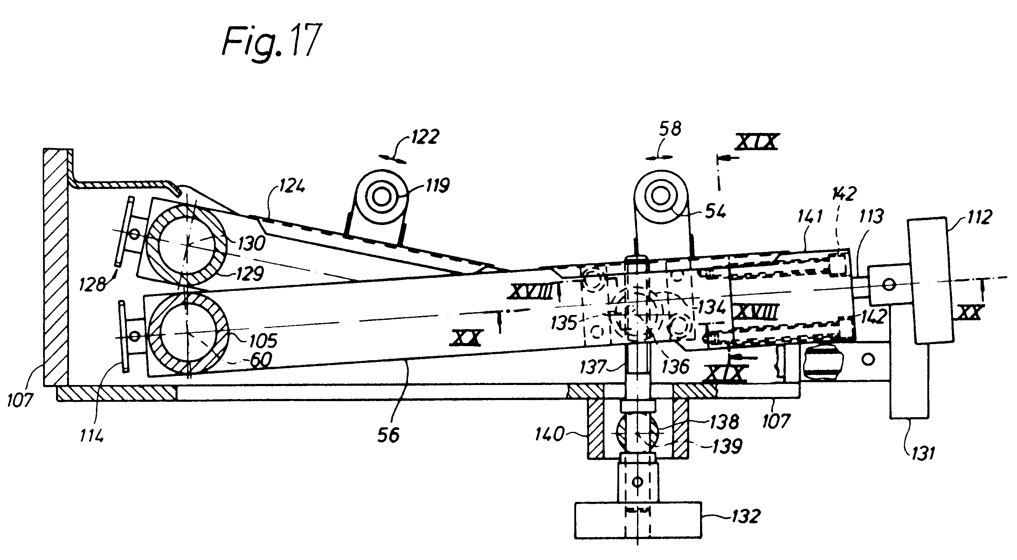

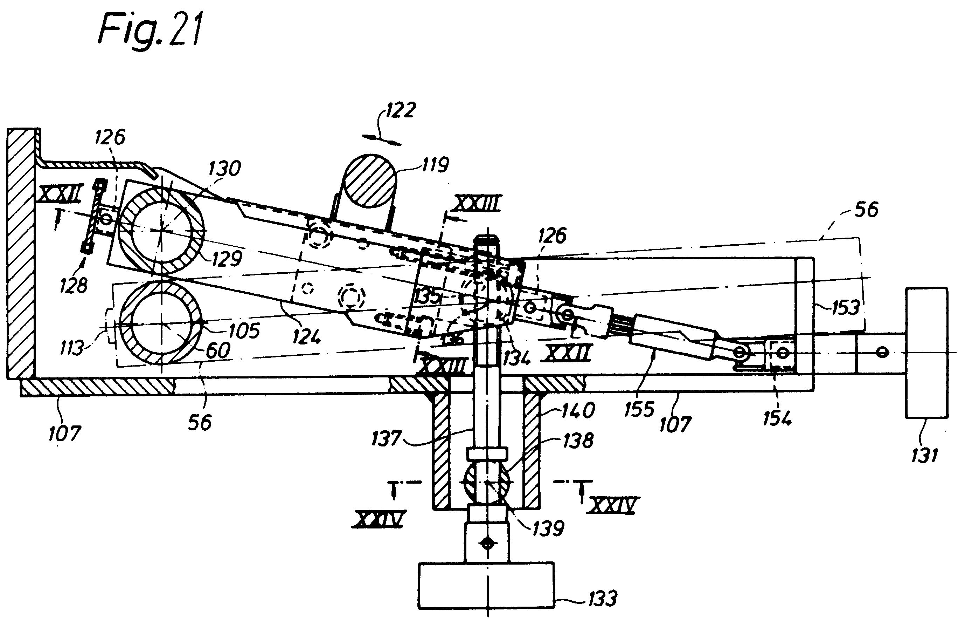

Da die in Fig. 16 gezeigte Stelleinrichtung 52 eine solche für Doppelformbetrieb ist, sind gemäß Fig. 2 außer den Kupplungsteilen 54, 55 zwei weitere Kupplungsteile 119 und 120 vorgesehen, die in senkrechtem Abstand voneinander entlang einer senkrechten Achse 121 miteinander fluchten. Die Kupplungsteile 119, 120 sind in der gleichen Weise in Richtung von Doppelpfeilen 122 und 123 Längsauslegern 124 (Fig. 17) und 125 verschiebbar wie die Kupplungsteile 54, 55. Dazu dienen in analoger Weise erste Gewindespindeln 126 (Fig. 21) und 127, die wiederum durch ein als Kettentrieb ausgebildetes Getriebe 128 (Fig. 21) miteinander verbunden sind. Die Auslegar 124, 125 sind an einer parallel zu der Säule 105 in der gleichen Weise angeordneten Säule 129 (Fig. 17 und 21) befestigt. Eine erste Schwenkachse 130 der Säule 129 erstreckt sich parallel zu der ersten Schwenkachse 60. Die gemeinsame Verschiebebewegung der Kupplungsteile 119, 120 erfolgt durch ein Handrad 131, wie im Zusammenhang mit Fig. 21 näher erläutert werden wird.

Die Schwenkung der Ausleger 56, 57 um die erste Schwenkachse 60 geschieht durch Betätigung eines Handrades 132. In ähnlicher Weise werden die Ausleger 124, 125 um die erste Schwenkachse 130 mit einem Handrad 133 verschwenkt.

Dazu für die Ausleger 56, 57 geeignete Mittel verdeutlicht Fig. 17. Im Abstand von der ersten Schwenkachse 60 ist dort an dem Ausleger 56 eine Mutter 134 mit kreiszylindrischer Außenfläche und querverlaufender Gewindebohrung 135 vorgesehen. Die Mutter 134 ist um eine zu der ersten Schwenkachse 60 parallele zweite Schwenkachse 136 schwenkbar gelagert. Quer zu einer Verbindungslinie zwischen den beiden Schwenkachsen 60, 136 erstreckt sich eine zweite Gewindespindel 137, die in die Gewindebohrung 135 der Mutter 134 eingreift. Die zweite Gewindespindel 137 ist in axialer Richtung an einem von ihr durchdrungenen Lagerzapfen 138 festgelegt. Der Lagerzapfen 138 ist um eine dritte Schwenkachse 139 schwenkbar in einem Fortsatz 140 des Rahmens 107 gelagert. Die Drehung des Handrades 132 führt zu einer Schwenkung der zweiten Gewindespindel 137 um die dritte Schwenkachse 139 und letztlich zu einer Schwenkung der Ausleger 56, 57 um die erste Schwenkachse 60.

Aus Fig. 17 ist erkennbar, daß ein Kopfstück 141 des Auslegers 56 an dem Rest des Auslegers 56 mit Schrauben 142 befestigt ist.

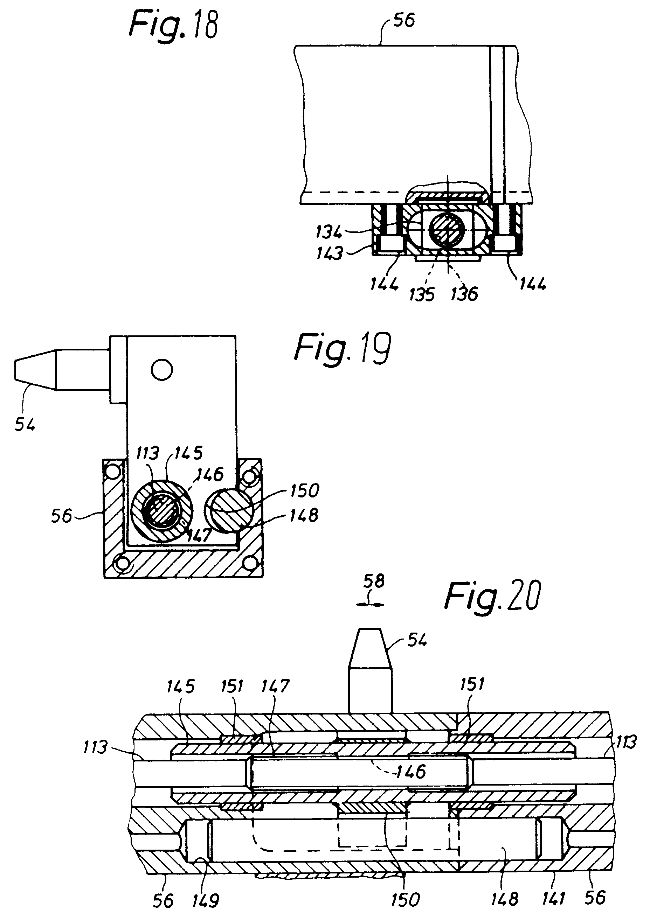

Fig. 18 verdeutlicht Einzelheiten der Schwenklagerung der Mutter 134. Dazu ist ein Lagerklotz 143 mit Schrauben 144 an eine Unterseite des Auslegers 56 gezogen.

Gemäß Fig. 19 ist das Kupplungsteil 54 z.B. durch Schweißung (Fig. 20) an einer Gewindehülse 145 befestigt. Die Gewindehülse 145 greift mit einem Innengewinde 146 in ein Außengewinde 147 der ersten Gewindespindel 113. Eine Drehung der ersten Gewindespindel 113 nimmt daher die Gewindehülse 145 und damit das Kupplungsteil 54 in axialer Richtung mit. Dabei wird ein unerwünschtes Kippen des Kupplungsteils 54 um die Längsachse der ersten Gewindespindel 113 durch einen Führungsbolzen 148 verhindert, der gemäß Fig. 20 in einer Bohrung 149 des Auslegers 56 untergebracht ist. Das Kupplungsteil 54 übergreift den Führungsbolzen 148 mit einer unteren Ausnehmung 150.

Fig. 20 zeigt, wie die Gewindehülse 145 über Gleitlager 151 in dem Ausleger 56 axial verschiebbar gelagert ist. Das Kopfstück 141 ermöglicht Montage und Demontage des Führungsbolzens 148 in dem Ausleger 56.

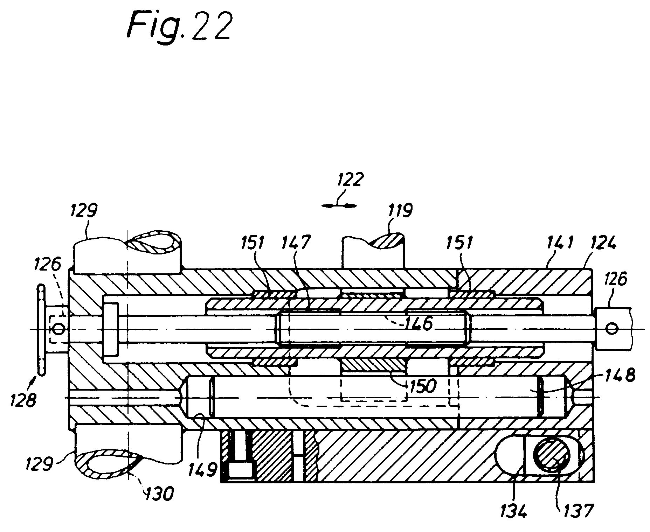

Die Schwenkung der Ausleger 124, 125 um die erste Schwenkachse 130 ist in ähnlicher Weise gelöst. Dazu wird auf die Fig. 17 bis 24 Bezug genommen, in denen so weit wie möglich gleiche Bezugszahlen für gleichartige Bauelemente verwendet sind. Die Schwenkung um die erste Schwenkachse 130 wird also durch Betätigung des Handrades 133 bewerkstelligt.

Fig. 24 zeigt, wie der Lagerzapfen 138 durch Sprengringe 152 in axialer Richtung gegenüber dem Fortsatz 140 festgelegt ist.

Gemäß Fig. 21 ist das Handrad 131 nicht unmittelbar auf der ersten Gewindespindel 126 befestigt, sondern drehbar an einer Stirnwand 153 des Rahmens 107 gelagert. Dadurch wird ein Wellenstumpf 154 drehend angetrieben, an dem das eine Ende einer teleskopierbaren Gelenkwelle 155 angeschlossen ist. Das andere Ende der Gelenkwelle 155 ist an der ersten Gewindespindel 126 angeschlossen. Auf diese Weise läßt sich unabhängig von der Schwenkstellung des Auslegers 124 um die erste Schwenkachse 130 die Verschiebung des Kupplungsteils 119 in Richtung des Doppelpfeils 122 bewerkstelligen.

Durch die Überlagerung der Schwenkung der Ausleger 56, 57 und 124, 125 um die ersten Schwenkachsen 60, 130 einerseits und der Längsbewegung der Kupplungsteile 54, 55 und 119, 120 können die Kupplungsteile zweidimensional in einer zu den ersten Schwenkachsen 60, 130 rechtwinkligen Ebene an jeden Punkt eingestellt werden.

Fig. 25 verdeutlicht an dem Winkelstück 110 die Ausbildung und Anordnung der Langlöcher 111 sowie von Aufnahmebohrungen 156 für die oberen Enden der Lagerzapfen 109 (Fig. 16).

## Patentansprüche

1. Rinneneinrichtung (1) zur Leitung Von Tropfen schmelzflüssigen Glases von einem Tropfenspeiser (2) jeweils durch ein Rinnensystem (3) in Formen (4) wenigstens einer Glasformmaschine (170),
wobei jedes Rinnensystem (3) eine Scooprinne (8), eine Lengrinne (10) und eine Endrinne (11) aufweist,
wobei die Scooprinne (8) gekrümmt ist und den vom Tropfenspeiser (2) kommenden Tropfen auffängt, und schräg nach unten in die Langrinne (10) umlenkt,
wobei die Langrinne (10) zumindest annähernd gerade ausgebildet, schräg nach unten geneigt, an ihrem oberen, den Tropfen übernehmenden Ende (18) maschinenfest gelenkig gelagert und an ihrem unteren, den Tropfen an die Endrinne (11) abgebenden Ende (23) durch eine Stellvorrichtung (43) heb- und senkbar ist,
und wobei die Endrinne (11) gekrümmt ist, den von der Langrinne (10) kommenden Tropfen nach unten hin koaxial zu der Längsachse (31) der Form (4) umlenkt und durch eine Stelleinrichtung (52) in einer zu der Längsachse (31) der Form (4) rechtwinkligen Ebene einstellbar ist,
dadurch gekennzeichnet, daß die Stelleinrichtung (52) für jede Endrinne (11) wenigstens ein die Endrinne (11) tragendes Kupplungsteil (54,55; 119,120) aufweist,
daß jedes Kupplungsteil (54,55;119,120) eine Relativschwenkung von Kupplungsteil und Endrinne (11) um eine zur Längsachse (31) der Form (4) parallele Achse (53;121) ermöglicht,
und daß jedes Kupplungsteil (54,55;119,120) in einer zur Längsachse (31) der Form (4) rechtwinkligen Ebene einstellbar ist.

2. Rinneneinrichtung nach Anspruch 1, dadurch gekennzeichnet, daß jedes Kupplungsteil (54,55;119,120) an einem Ausleger (56,57;124,125) in der zur Längsachse (31) der Form (4) rechtwinkligen Ebene längsverschiebbar ist, und daß der Ausleger (56,57;124,125) um eine zur Längsachse (31) dar Form (4) parallele, maschinenfeste erste Schwenkachse (60;130) schwenkbar ist.

3. Rinneneinrichtung nach Anspruch 2, dadurch gekennzeichnet, daß jedes Kupplungsteil (54,55;119,120) an einer an dem Ausleger (56,57;124,125) längsverschiebbar gelagerten Gewindehülse (145) befestigt ist, und daß in ein Gewinde (146) der Gewindehülse (145) eine axial festgelegte erste Gewindespindel (113,118;126, 127) eingreift.

4. Rinneneinrichtung nach Anspruch 2 oder 3, dadurch gekennzeichnet, daß im Abstand von der ersten Schwenkachse (60;130) an dem Ausleger (56;124) eine Mutter (134) um eine zu der ersten Schwenkachse (60;130) parallele zweite Schwenkachse (136) schwenkbar gelagert ist, und daß sich quer zu einer Verbindungslinie zwischen den beiden Schwenkachsen (60,136;130,136) und rechtwinklig zu der zweiten Schwenkachse (136) eine axial festgelegte zweite Gewindespindel (137) erstreckt und in eine Gewindebohrung (135) der Mutter (134) eingreift.

5. Rinneneinrichtung nach Anspruch 3 oder 4, dadurch gekennzeichnet, daß für jede Endrinne (11) zwei im Abstand voneinander angeordnete, miteinander fluchtende Kupplungsteile (54,55;119,120) vorgesehen sind,
daß beide Ausleger (56,57;124,125) an einer gemeinsamen, um die erste Schwenkachse (60;130) schwenkbaren Säule (105;129) befestigt sind,
und daß die beiden ersten Gewindespindeln (113,118; 126,127) der Kupplungsteile (54,55;119,120) durch ein Getriebe (115;128) miteinander verbunden sind.

6. Rinneneinrichtung nach einem der Ansprüche 1 bis 5, dadurch gekennzeichnet, daß eine Bewegungsbahn (13) der Längsachse des Tropfens in der Endrinne (11) als Teil eines Ellipsenviertels (25) ausgebildet ist, wobei an einem unteren Ende (27) der Endrinne (11) eine kleine Halbachse (26) des Ellipsenviertels (25) rechtwinklig zu der Bewegungsbahn (13) und waagerecht liegt.

7. Rinneneinrichtung nach einem der Ansprüche 1 bis 5, dadurch gekennzeichnet, daß eine Bewegungsbahn (13) der Längsachse des Tropfens in der Endrinne (11) als Teil eines Viertelkreises (102) ausgebildet ist, wobei an einem unteren Ende (27) der Endrinne (11) eine Tangente (104) an den Viertelkreis (102) koaxial mit der Längsachse (31) der Form (4) ist.

8. Rinneneinrichtung nach einem der Ansprüche 1 bis 5, dadurch gekennzeichnet, daß eine Bewegungsbahn (13) der Längsachse des Tropfens in der Endrinne (11) in der Bewegungsrichtung des Tropfens zunächst einen Teil (167) eines Viertelkreises (102) und daran tangential anschließend einen Teil (169) eines Ellipsenviertels (25) aufweist, wobei an einem unteren Ende (27) der Endrinne (11) eine kleine Halbachse (26) des Ellipsenviertels (25) rechtwinklig zu der Bewegungsbahn (13) und waagerecht liegt.

9. Rinneneinrichtung nach Anspruch 8, dadurch gekennzeichnet, daß der Viertelkreis (102) sich dem Ellipsenviertel (25) von der Außenseite des Ellipsenviertels (25) her nähert.

10. Rinneneinrichtung nach einem der Ansprüche 1 bis 9, dadurch gekennzeichnet, daß eine Bewegungsbahn (13) der Längsachse des Tropfens in der Langrinne (10) tangential in eine Bewegungsbahn (13) der Längsachse des Tropfens in der Endrinne (11) übergeht.

11. Rinneneinrichtung nach einem der Ansprüche 1 bis 10, dadurch gekennzeichnet, daß beim sogenannten Mehrfachformbetrieb, wenn also nacheinander jeder Glasformmaschine zumindest annähernd gleichzeitig mehr als ein Tropfen zugeführt wird, alle Elemente in einer dieser Tropfenanzahl entsprechenden Anzahl vorgesehen sind.

## Claims

1. Delivery apparatus (1) for the transportation of gobs of molten glass from a gob feeder (2) by way of a respective delivery system (3) into moulds (4) of at least one glassware forming machine (170),
- wherein each delivery system (3) includes a scoop (8), a trough (10) and a deflector (11),
- wherein the scoop (8) is curved and the gobs coming from the gob feeder (2) are caught and directed downwards at an angle by the scoop into the trough (10),
- wherein the trough (10) is at least approximately linear, slopes downwards at an angle, is mounted in an articulated manner relative to the machine at its upper end (18) which receives the gobs and can be raised and lowered at its lower end (23) which delivers the gobs to the deflector (11) by means of an adjustment device (43),
- and wherein the deflector (11) is curved, deflects the gobs coming from the trough (10) downwards to be coaxial with respect to the longitudinal axis (31) of the mould (4), and by means of a setting device (52) is adjustable in a plane perpendicular to the longitudinal axis (31) of the mould (4), characterised in that the setting device (52) for each deflector (11) comprises at least one coupling member (54, 55; 119, 120) carrying the deflector (11),
- each coupling member (54, 55; 119, 120) makes possible a relative swivelling movement of coupling member and deflector (11) about an axis (53; 121) parallel to the longitudinal axis (31) of the mould (4),
- and each coupling member (54, 55; 119, 120) is adjustable in a plane perpendicular to the longitudinal axis (31) of the mould (4).

2. Delivery apparatus according to claim 1, characterised in that each coupling member (54, 55; 119, 120) is displaceable lengthwise on a strut (56, 57; 124, 125) in the plane perpendicular to the longitudinal axis (31) of the mould (4), and the strut (56, 57; 124, 125) is swivellable about a first swivel axis (60; 130) which is fixed relative to the machine and which is parallel to the longitudinal axis (31) of the mould (4).

3. Delivery apparatus according to claim 2, characterized in that each coupling member (54, 55; 119, 120) is fixed to a threaded sleeve (145) mounted to be longitudinally displaceable on the strut (56, 57; 124, 125), and an axially fixed first threaded spindle (113, 118; 126, 127) engages in a thread (146) of the threaded sleeve (145).

4. Delivery apparatus according to claim 2 or 3, characterised in that a nut (134) which is mounted to be swivellable about a second swivel axis (136) parallel to the first swivel axis (60; 130) is spaced from the first swivel axis (60; 130) on the strut (56; 124), and an axially fixed second threaded spindle (137) extends transversely to a connecting line between the two swivel axes (60, 136; 130, 136) and perpendicular to the second swivel axis (136) and engages in a threaded bore (135) in the nut (134).

5. Delivery apparatus according to claim 3 or 4, characterised in that two spaced, aligned coupling members (54, 55; 119, 120) are provided for each deflector (11),
- both struts (56, 57; 124, 125) are fixed on a common column (105, 129) swivellable about the first swivel axis (60; 130),
- and the two first threaded spindles (113, 118; 126, 127) of the coupling members (54, 55; 119, 120) are connected to one another by a gear means (115; 128).

6. Delivery apparatus according to one of claims 1 to 5, characterised in that a path of movement (13) of the longitudinal axes of the gobs in the deflector (11) is a part of a quarter ellipse (25), and wherein at a lower end (27) of the deflector (11) a minor half axis (26) of the quarter ellipse (25) lies horizontal and perpendicular to the path of movement (13).

7. Delivery apparatus according to one of claims 1 to 5, characterised in that a path of movement (13) of the longitudinal axes of the gobs in the deflector (11) is a part of a quarter circle (102), and wherein at a lower end (27) of the deflector (11) a tangent (104) to the quarter circle (102) is coaxial with respect to the longitudinal axis (31) of the mould (4).

8. Delivery apparatus according to one of claims 1 to 5, characterised in that a path of movement (13) of the longitudinal axes of the gobs in the deflector (11) includes in the direction of movement of the gobs first a part (167) of a quarter circle (102) and thereafter tangentially to that a part (169) of a quarter ellipse (25), and wherein at a lower end (27) of the deflector (11) a minor half axis (26) of the quarter ellipse (25) lies horizontal and perpendicular to the path of movement (13).

9. Delivery apparatus according to claim 8, characterised in that the quarter circle (102) approaches the quarter ellipse (25) from the outside of the quarter ellipse (25).

10. Delivery apparatus according to one of claims 1 to 9, characterised in that a path of movement (13) of the longitudinal axes of the gobs in the trough (10) merges tangentially into a path of movement (13) of the longitudinal axes of the gobs in the deflector (11).

11. Delivery apparatus according to one of claims 1 to 10, characterised in that for so-called multiple mould operation, when more than one gob is fed at least approximately at the same time in each glassware forming machine, all elements are provided in a number corresponding to this number of gobs.

## Revendications

1. Dispositif de goulottes (1) destiné à conduire des gouttes de verre fondu liquide d'un distributeur de gouttes (2) dans des moules (4) d'au moins une machine à mouler le verre (170) par un système de goulotte (3) pour chacun,
chaque système de goulotte (3) comprenant un scoop (8), une goulotte longue (10) et un déflecteur (11),
le scoop (8) étant incurvée et interceptant la goutte qui provient du distributeur de gouttes (2) et la renvoyant obliquement vers le bas dans la goulotte longue (10),
la goulotte longue (10) étant de conformation au moins approximativement rectiligne, étant inclinée obliquement vers le bas, étant montée de façon articulée en position fixe sur la machine à son extrémité supérieure (18) qui reçoit la goutte, et pouvant être soulevée et abaissée par un dispositif de réglage (43) à son extrémité inférieure (23) qui débite la goutte dans le déflecteur (11),
et le déflecteur (11) étant incurvée, renvoyant la goutte qui arrive de la goulotte longue (10) vers le bas, coaxialement à l'axe longitudinal (31) du moule (4), et pouvant être réglée par un dispositif de réglage (52) dans un plan perpendiculaire à l'axe longitudinal (31) du moule (4),
caractérisé en ce que le dispositif de réglage (52) pour chaque déflecteur (11) comprend au moins un élément d'accouplement (54, 55 ; 119, 120) qui porte le déflecteur (11),
en ce que chaque élément d'accouplement (54, 55 ; 119,120) permet un pivotement relatif de l'élément d'accouplement et du déflecteur (11) autour d'un axe (53 ; 121) parallèle à l'axe longitudinal (31) du moule (4),
et en ce que chaque élément d'accouplement (54, 55 ; 119, 120) est réglable dans un plan perpendiculaire à l'axe longitudinal (31) du moule (4).

2. Dispositif de goulottes selon la revendication 1, caractérisé en ce que chaque élément d'accouplement (54, 55 ; 119, 120) est mobile en translation longitudinale sur une potence (56, 57 ; 124, 125) dans le plan perpendiculaire à l'axe longitudinal (31) du moule (4), et en ce que la potence (56, 57 ; 124, 125) peut pivoter autour d'un premier axe de pivotement (60 ; 130) solidaire de la machine, parallèle à l'axe longitudinal (31) du moule (4).

3. Dispositif de goulottes selon la revendication 2, caractérisé en ce que chaque élément d'accouplement (54, 55 ; 119, 120) est fixé à un manchon fileté (55) monté mobile en translation longitudinale sur la potence (56, 57 ; 124, 125) et en ce qu'une première vis (113, 118 ; 126, 127), immobilisée axialement est en prise dans un filetage (146) du manchon fileté (145).

4. Dispositif de goulottes selon la revendication 2 ou 4, caractérisé en ce qu'à distance du premier axe de pivotement (60 ; 130), un écrou (134) est monté pivotant sur la potence (56 ; 124) pour tourner autour d'un deuxième axe de pivotement (136) parallèle au premier axe de pivotement (60 ; 130) et en ce qu'une deuxième vis (137) immobilisée dans la direction axiale s'étend transversalement à une ligne de jonction entre les deux axes de pivotement (60, 136 ; 130, 136) et perpendiculairement au deuxième axe de pivotement (136) et est en prise dans un perçage fileté (135) de l'écrou (134).

5. Dispositif de goulottes selon la revendication 3 ou 4, caractérisé en ce que, pour chaque déflecteur (11), sont prévues deux éléments d'accouplement (54, 55 ; 119, 120) alignés l'un sur l'autre, disposés à distance l'un de l'autre,
en ce que les deux potences (56, 57 ; 124, 125) sont fixées à une colonne commune (105, 129) qui peut pivoter autour du premier axe de pivotement (60 ; 130),
et en ce que les deux premières vis (113, 118 ; 126, 127) des éléments d'accouplement (54, 55 ; 119, 120) sont reliées l'une à l'autre par une transmission (115 ; 128).

6. Dispositif de goulottes selon l'une des revendications 1 à 5, caractérisé en ce que la trajectoire (13) de l'axe longitudinal de la goutte dans le déflecteur (11) est constituée par une partie d'un quart d'ellipse (25), cependant qu'à une extrémité inférieure (27) du déflecteur (11), un demi petit axe (26) du quart d'ellipse (25) s'étend perpendiculairement à la trajectoire (13) et horizontalement.

7. Dispositif de goulottes selon l'une des revendications 1 à 5, caractérisé en ce que la trajectoire (13) de l'axe longitudinal de la goutte dans le déflecteur (11) présente la forme d'une partie d'un quart de cercle (102) cependant qu'à une extrémité inférieure (27) du déflecteur (11), une tangente (104) au quart de cercle (102) est coaxiale à l'axe longitudinal (31) du moule (4).

8. Dispositif de goulottes selon l'une des revendications 1 à 5, caractérisé en ce que la trajectoire (13) de l'axe longitudinal de la goutte dans le déflecteur (11) dans la direction du déplacement de la goutte présente tout d'abord une partie (167) d'un quart de cercle (102) et, en raccordement tangentiel, une partie (169) d'un quart d'ellipse (25) cependant qu'à l'extrémité inférieure (27) du déflecteur (11), un demi petit axe (26) du quart d'ellipse (25) s'étend perpendiculairement à la trajectoire (13) et horizontalement.

9. Dispositif de goulottes selon la revendication 8, caractérisé en ce que le quart de cercle (102) se rapproche du quart d'ellipse (25) en partant du côté extérieur du quart d'ellipse (25).

10. Dispositif de goulottes selon l'une des revendications 1 à 9, caractérisé en ce qu'une trajectoire (13) de l'axe longitudinal de la goutte dans la goulotte longue (10) se raccorde tangentiellement à la trajectoire (13) de l'axe longitudinal de la goutte dans le déflecteur (11).

11. Dispositif de goulottes selon l'une des revendications 1 à 10, caractérisé en ce que, dans le mode de travail dit à moules multiples, c'est-à-dire lorsque plusieurs gouttes sont acheminées au moins à peu près simultanément, à chaque machine à mouler le verre l'une après l'autre, tous les éléments sont prévus en un nombre qui correspond à ce nombre de gouttes.
